**Europäisches Patentamt**

**European Patent Office**

**Office européen des brevets**

(19)

(11) Veröffentlichungsnummer: **0 431 254 A1**

# (12) EUROPÄISCHE PATENTANMELDUNG

(21) Anmeldenummer: **90113833.9**

(51) Int. Cl.⁵: **G01P 3/481**

(22) Anmeldetag: **19.07.90**

(30) Priorität: **01.12.89 DE 3939773**

(43) Veröffentlichungstag der Anmeldung:
**12.06.91 Patentblatt 91/24**

(84) Benannte Vertragsstaaten:
**DE FR GB IT SE**

(71) Anmelder: **FATEC FAHRZEUGTECHNIK GmbH**
**Borsigstrasse 2**
**W-8755 Alzenau(DE)**

(72) Erfinder: **Hinrichsen, Lutz-Gunter**
**Holunderweg 6**
**W-8755 Alzenau(DE)**

(74) Vertreter: **Könekamp, Herbert, Dipl.-Ing. et al**
**Patentassessoren Dipl.-Ing. Herbert**
**Könekamp/Dipl.-Ing.(FH)Thomas**
**KleinSodener Strasse 9 Postfach 61 40**
**W-6231 Schwalbach(DE)**

(54) **Antiblockiersystem-Geschwindigkeitssensor.**

(57) Es wird ein Antiblockiersystem-Geschwindigkeitssensor (201) mit einer Aufnahmeeinrichtung angegeben, an der ein von einem Rad angetriebener Geber (202) vorbeiläuft, der eine sich in Bewegungsrichtung (211) mit gleichen Perioden wiederholende Struktur aufweist.

Bei Geschwindigkeitssensoren dieser Art ist die zeitliche Auflösung der ermittelten Werte bei niedrigen Geschwindigkeiten zu gering. Die Auflösung soll verbessert werden.

Dazu weist die Aufnahmeeinrichtung mehrere Aufnahmeelemente (221-232) auf, die so angeordnet sind, daß jedes Aufnahmeelement einem Ort auf dem Geber gegenübersteht, der sich von jedem Ort auf dem Geber, dem ein anderes Aufnahmeelement gegenübersteht, durch seine Lage innerhalb der Periode unterscheidet, wobei bei Bewegung des Gebers die Aufnahmeelemente zeitlich versetzte Impulse erzeugen.

Fig.3

EP 0 431 254 A1

## ANTIBLOCKIERSYSTEM-GESCHWINDIGKEITSSENSOR

Die Erfindung betrifft einen Antiblockiersystem-Geschwindigkeitssensor mit einer Aufnahmeeinrichtung, an der ein von einem Rad angetriebener Geber vorbeiläuft, der eine sich in Bewegungsrichtung mit gleichen Perioden wiederholende Struktur aufweist.

In einem Antiblockiersystem ist es notwendig, die Geschwindigkeit jedes einzelnen Fahrzeugrades zu ermitteln. Dazu kann beispielsweise ein mit dem Fahrzeugrad direkt gekoppeltes Geberrad verwendet werden, das entlang seines Umfangs eine sich periodisch wiederholende Struktur aufweist, beispielsweise eine optische Markierung oder hervorstehende Eisenzähne, die in einem entsprechenden Aufnehmer Impulse erzeugen, die dieser an eine Steuereinheit weiterleiten kann. Die Perioden müssen eine gewisse Mindestlänge aufweisen, da die Auflösung des Aufnehmers begrenzt ist. Folglich lassen sich auf einem Geberrad, dessen Durchmesser durch den Durchmesser des Fahrzeugsrades begrenzt ist, lediglich eine bestimmte Anzahl von Perioden unterbringen. Bei niedrigen Fahrzeug-Geschwindigkeiten wird dann die vom Aufnehmer erzeugte Impulsfrequenz ebenfalls sehr niedrig, was die Ermittlung einer genauen Radgeschwindigkeit sehr erschwert. Insbesondere können Geschwindigkeitsänderungen nicht erfaßt werden, die zwischen zwei Impulsen auftreten. Der Einsatz eines Getriebes, um die Geschwindigkeit des Geberrades zu erhöhen und somit die Auflösung der Impulse zu verbessern, scheidet in der Regel aus Gewichts- und Platzgründen aus.

Der Erfindung liegt die Aufgabe zugrunde, einen Antiblockiersystem-Geschwindigkeitssensor anzugeben, der bei gleicher Baugröße eine genauere Ermittlung der Fahrzeugrad-Geschwindigkeit erlaubt.

Diese Aufgabe wird bei einem Antiblockiersystem-Geschwindigkeitssensor der eingangs genannten Art dadurch gelöst, daß die Aufnahmeeinrichtung mehrere Aufnahmeelemente aufweist, die so angeordnet sind, daß jedes Aufnahmeelement einem Ort auf dem Geber gegenübersteht, der sich von jedem Ort auf dem Geber, dem ein anderes Aufnahmeelement gegenübersteht, durch seine Lage innerhalb der Periode unterscheidet, wobei bei Bewegung des Gebers die Aufnahmeelemente zeitlich versetzte Signale erzeugen.

Bei Einsatz von n-Sensoren ergeben sich also n-mal soviele Impulse während einer Periode wie beim Stand der Technik. Dadurch ergibt sich innerhalb einer Periode eine wesentlich höhere Auflösung, weil auch bei niedrigen Fahrzeugrad-Geschwindigkeiten eine höhere Anzahl von Impulsen zur Verfügung steht. Die Zeit zwischen zwei Impulsen wird dadurch wesentlich verkürzt. Eine Geschwindigkeitsänderung, die zwischen zwei Impulsen aufgetreten ist, wird dadurch wesentlich früher erkannt. Man kann, wenn man eine ausreichende Anzahl von Aufnahmeelementen vorsieht, den Geber wesentlich kleiner als bisher machen, ohne die Informationsdichte zu verringern. Wegen der Verwendung von mehr als einem Aufnahmeelement wird die Redundanz erhöht. Insbesondere bei Aufnahmeelementen, die als Ausgang lediglich einen logischen Pegel oder einen Impuls liefern, läßt sich ein Funktionsausfall leicht erkennen. Ein Aufnahmeelement, das seinen Ausgang nicht ändert, während die anderen Aufnahmeelemente ihren Ausgang ändern, muß defekt sein. Bei stehendem Fahrzeug ergab sich bisher das Problem eines sogenannten "Flankenjitters". Wenn das Aufnahmeelement bei stehendem Fahrzeug genau einem Übergang zwischen zwei Perioden gegenübersteht, beispielsweise der Grenze zwischen zwei optischen Markierungen oder einer Zahnflanke, können durch Vibrationen, die beispielsweise durch den laufenden Motor des Fahrzeugs verursacht werden, Impulse entstehen, die eine relativ große Radgeschwindigkeit vortäuschen. Ein ähnlicher Effekt kann durch Torsionsschwingungen beim Bremsen hervorgerufen werden. Erfindungsgemäß kann diese Erscheinung erkannt und eliminiert werden. Wenn der Effekt nämlich nur an einem einzigen Aufnahmeelement auftritt, ist dies ein Zeichen dafür, daß es sich tatsächlich nur um einen Flankenjitter handelt.

Mit Vorteil weist jede Periode des Gebers zwei Halbperioden gleicher Länge auf. Damit lassen sich nicht nur die Übergänge zwischen zwei Perioden zur Impulserzeugung nutzen, sondern auch die Übergänge zwischen zwei Halbperioden einer Periode. Dadurch, daß die Halbperioden gleich lang sind, lassen sich die erzeugten Impulse direkt in eine Geschwindigkeit umrechnen, ohne daß Ausgleichsrechnungen wegen der unterschiedlichen Länge der Halbperiode vorzunehmen wären. Die Anzahl der erzeugten Impulse wird also durch eine einfache Maßnahme verdoppelt.

In einer besonders bevorzugten Ausführungsform berechnet sich der Abstand 1 zwischen zwei Aufnahmeelementen nach folgender Formel

$$1 = \frac{p}{2n} \ (1 \ + \ m \ x \ n)$$

wobei p die Periodenlänge, n die Anzahl der Abtastelemente und m eine ganze Zahl ist. Bei einer Anordnung nach dieser Art ist eine Gewähr dafür gegeben, daß die einzelnen Aufnahmeelemente so angeordnet sind, daß sie bei Bewegung des Gebers zeitlich versetzt ihre Impulse erzeugen, wobei bei konstanter Radgeschwindigkeit der Abstand zwischen jeweils zwei Impulsen konstant bleibt.

Wenn ausreichend Platz zur Verfügung steht, wird bevorzugt, daß m = O ist. Alle Aufnahmeelemente sind dann innerhalb eines Bereichs untergebracht, der der Länge einer halben Periode entspricht.

Wenn dieser Platz nicht zur Verfügung steht, wird bevorzugt, daß m eine ganze Zahl ist, insbesondere daß m = Q ± 1 ist, wobei Q die Anzahl der auf dem Geber vorhandenen Perioden ist. Damit wird gewährleistet, daß zwischen den einzelnen Aufnahmeelementen ein maximaler Abstand vorhanden ist, der verhindert, daß sich die einzelnen Aufnahmeelemente gegenseitig beeinflußen.

Besonders bevorzugt ist, daß doppelt so viele Abtastelemente wie Perioden auf dem Geber vorhanden sind. Dies ermöglicht bei größtmöglichem Abstand der einzelnen Aufnahmeelemente, die zeitlich nacheinander ihre Impulse erzeugen, die größte Auflösung, d.h. den kleinsten Impulsabstand.

Mit Vorteil berühren die Abtastelemente den Geber nicht. Dies vermindert den Verschleiß.

Dabei ist bevorzugt, daß die Abtastelemente eine Änderung der optischen Struktur, des magnetischen Leitwerts oder eines elektrischen oder magnetischen Feldes erfassen.

Die Erfindung wird im folgenden anhand von bevorzugten Ausführungsbeispielen in Verbindung mit der Zeichnung beschrieben. Darin zeigen:

Fig. 1    einen ersten Geschwindigkeitssensor,

Fig. 2    einen zweiten Geschwindigkeitssensor und

Fig. 3    einen dritten Geschwindigkeitssensor.

Ein Geschwindigkeitssensor 1 weist ein Geberrad 2 auf, das an seinem Umfang in einer Periode p einen Zahn 3 und eine Zahnlücke 4 aufweist. Auf dem Umfang des Geberrades 2 sind mehrere derartige Perioden angeordnet. Radial dem Umfang des Geberrades 2 benachbart sind zwei Aufnahmeelemente 5, 6 angeordnet, die einen Impuls erzeugen, wenn eine Flanke 7, 12 zwischen Zahn 3 und Zahnlücke 4 an ihnen vorbeiläuft. Die Aufnahmeelemente 5, 6 erfassen dabei z.B. die Änderung des magnetischen Leitwertes, die das Geberrad 2, das vorzugsweise aus einem permeabeln Werkstoff, wie Eisen, besthet, bei der Drehung bewirkt. Zu diesem Zweck sind die beiden Aufnahmeelemente 5, 6 über Leitungen 8, 9 mit einer Auswerteeinrichtung 10 verbunden. Die Aufnahmeelemente 5, 6 können auch optische Markierungen oder elektrische bzw. magnetische Felder erfassen.

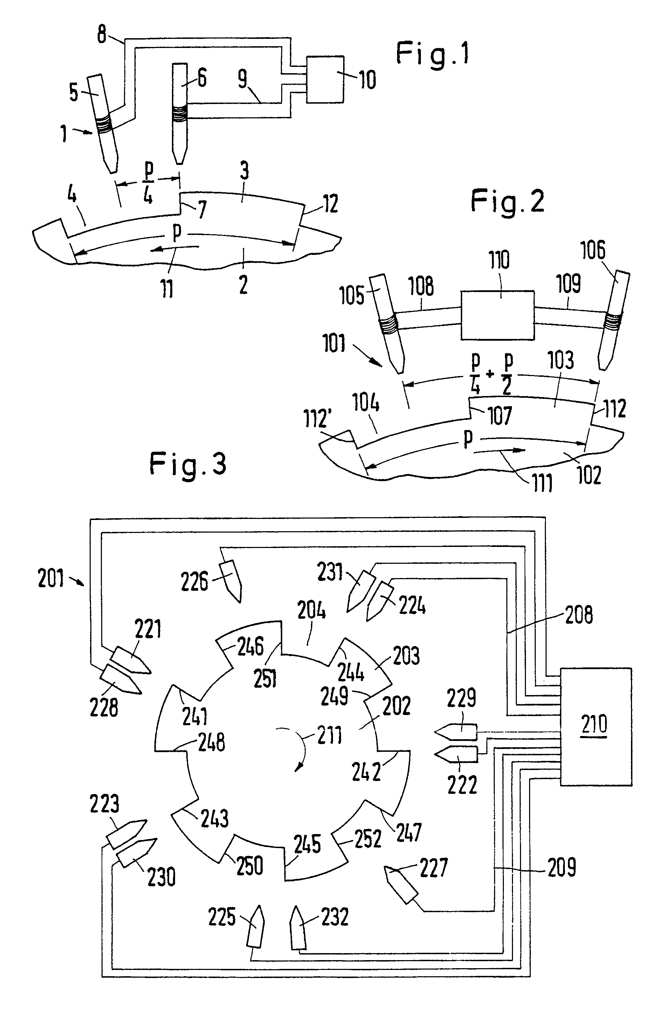

Wie sich aus Fig. 1 ergibt, sind die beiden Aufnahmeelemente 5, 6 in einem Abstand von p/4 angeordnet. In einer Periode werden damit vier zeitlich gleichmäßig gegeneinander versetzte Impulse erzeugt. Dabei wird angenommen, daß sich das Geberrad in Richtung des Pfeiles 11 dreht. Der erste Impuls wird erzeugt, wenn die Flanke 7 am Aufnahmeelement 6 vorbeiläuft. Der nächste Impuls wird erzeugt, wenn die Flanke 7 am Aufnahmeelement 5 vorbeiläuft. In der Zwischenzeit hat das Geberrad 2 eine Viertelperiode zurückgelegt. Der dritte Impuls wird erzeugt, wenn die andere Flanke 12 des Zahnes 3 am Aufnahmeelement 6 vorbeiläuft. Der vierte Impuls wird erzeugt, wenn die Flanke 12 am Aufnahmeelement 5 vorbeiläuft. Der nächste Impuls wird erzeugt, wenn die Flanke 7 der nächsten Periode wieder am Aufnahmeelement 6 vorbeiläuft. Zwischen zwei Impulsen hat das Geberrad 2 jeweils nur eine Viertelperiode zurückgelegt. Die Auflösung der Geberradgeschwindigkeit und damit der Fahrzeugradgeschwindigkeit ist außerordentlich hoch, d.h. der zeitliche Abstand zwischen zwei Impulsen bei gegebener Geschwindigkeit ist sehr klein. Selbstverständlich können anstelle der zwei gezeigten Aufnahmeelemente 5, 6 auch drei, vier oder noch mehr Aufnahmeelemente eingesetzt werden. Bei drei Aufnahmeelementen würde der Abstand zwischen zwei Aufnahmeelementen 1/6 der Periodenlänge betragen. In einer Periode würden entsprechend sechs Impulse erzeugt werden. Die in Fig. 1 gezeigte Ausführungsform ist immer dann vorteilhaft, wenn konstruktiv ausreichend Platz zur Verfügung steht, um eine größere Anzahl von Aufnahmeelementen auf engem Raum unterzubringen. Man kann dann die Leitungen 8, 9 über einen großen Bereich gemeinsam führen, was die Störanfälligkeit vermindert und die Montage vereinfacht. Steht dieser Platz nicht zur Verfügung, zeigt Fig. 2 eine alternative Lösung, bei der Elemente, die denen der Fig. 1 entsprechen, mit um 100 erhöhten Bezugzeichen versehen sind. Der Abstand zwischen zwei Aufnahmeelementen 105, 106 ist um eine halbe Periodenlänge vergrößert. Allgemein ausgedrückt richtet sich der Abstand 1 zwischen zwei Aufnahmeelementen 105, 106 nach der folgenden Formel

$$1 = \frac{p}{2n} \left( 1 + m \times n \right)$$

wobei p die Periodenlänge, n die Anzahl der Abtastelemente und m eine ganze Zahl ist. Dabei ist es sinnvoll, wenn m kleiner oder gleich der Hälfte der Anzahl der Perioden Q des Geberrades ist. Die Ausführungsform nach Fig. 1 ist ein Sonderfall dieses allgemeinen Ausdrucks, wobei m = O ist. Bei der in Fig. 2 gezeigten Anordnung wird, wenn sich das Geberrad 102 in Richtung des Pfeiles 111 dreht, der erste Impuls erzeugt, wenn die Flanke 112 am Aufnahmeelement 106 vorbeiläuft. Der nächste Impuls wird erzeugt, wenn die Flanke 112' der nächsten Periode am Aufnahmeelement 105 vorbeiläuft. Der dritte Impuls wird dann erzeugt, wenn die Flanke 107 am Aufnahmeelement 106 vorbeiläuft, während der vierte Impuls erzeugt wird, wenn die nicht dargestellte Flanke zwischen Zahn und Zahnlücke der nächsten Periode am Aufnahmeelement 105 vorbeiläuft. Hieraus ist ersichtlich, daß aufeinanderfolgende Impulse nicht unbedingt von einer einzigen Periode auf dem Geberrad erzeugt werden müssen. Vielmehr können auch mehrere Perioden daran beteiligt sein.

Fig. 3 zeigt eine Anordnung, bei der bei maximalem Abstand zwischen zwei Aufnahmeelementen, die zeitlich aufeinanderfolgende Impulse erzeugen, die größtmögliche Anzahl von Aufnahmeelementen untergebracht ist. Elemente, die denen der Fig. 1 entsprechen, sind mit um 200 erhöhten Bezugszeichen versehen. Der erste Impuls wird erzeugt, wenn die Flanke 241 am Aufnahmeelement 221 vorbeiläuft. Der nächste Impuls wird erzeugt, wenn die Flanke 242 am Aufnahmeelement 222 vorbeiläuft. Der dritte Impuls wird erzeugt, wenn die Flanke 243 am Aufnahmeelement 223 vorbeiläuft. Entsprechende Impulse ergeben sich, wenn (in dieser Reihenfolge) die Flanken 244, 245, 246, 247, 248, 249, 250, 251, 252 an den Aufnahmeelementen 224, 225, 226, 227, 228, 229, 230, 231, 232, vorbeilaufen. Bemerkenswert bei dieser Anordnung ist, daß die Aufnahmeelemente, die zeitlich nacheinander ihre Impulse erzeugen, räumlich am weitesten voneinander entfernt sind. Beispielsweise erzeugen die Aufnahmeelemente 223 und 224 ihre Impulse unmittelbar nacheinander. Sie sind aber räumlich praktisch diametral zum Mittelpunkt des Geberrades 202 angeordnet. Dies verringert die gegenseitige Beeinflussung der Impulserzeugung in den einzelnen Aufnahmeelementen.

**Ansprüche**

1. Antiblockiersystem-Geschwindigkeitssensor mit einer Aufnahmeeinrichtung, an der ein von einem Rad angetriebener Geber vorbeiläuft, der eine sich in Bewegungsrichtung mit gleichen Perioden wiederholende Struktur aufweist, dadurch gekennzeichnet, daß die Aufnahmeeinrichtung mehrere Aufnahmeelemente (5, 6; 105, 106; 221-232) aufweist, die so angeordnet sind, daß jedes Aufnahmeelement einem Ort auf dem Geber (2, 102, 202) gegenübersteht, der sich von jedem Ort auf dem Geber, dem ein anderes Aufnahmeelement gegenübersteht, durch seine Lage innerhalb der Periode unterscheidet, wobei bei Bewegung des Gebers die Aufnahmeelemente zeitlich versetzte Impulse erzeugen.

2. Sensor nach Anspruch 1, dadurch gekennzeichnet, daß jede Periode des Gebers (2, 102, 202) zwei Halbperioden gleicher Länge aufweist.

3. Sensor nach Anspruch 1 oder 2, dadurch gekennzeichnet, daß sich der Abstand 1 zwischen zwei Aufnahmeelementen (5, 6; 105, 106; 221-232) nach folgender Formel berechnet

$$1 = \frac{p}{2n} \; (1 + m \times n)$$

wobei p die Periodenlänge, n die Anzahl der Abtastelemente und m eine ganze Zahl ist.

4. Geschwindigkeitssensor nach Anspruch 3, dadurch gekennzeichnet, daß m = O ist.

5. Geschwindigkeitssensor nach Anspruch 3, dadurch gekennzeichnet, daß m = Q + 1, wobei Q die Anzahl der auf dem Geber (2, 102, 202) vorhandenen Perioden ist.

6. Geschwindigkeitssensor nach Anspruch 3 oder 5, dadurch gekennzeichnet, daß doppelt so viele Abtastelemente (221-232) wie Perioden auf dem Geber (202) vorhanden sind.

7. Geschwindigkeitssensor nach einem der Ansprüche 1 bis 6, dadurch gekennzeichnet, daß die Abtastelemente (5, 6; 105, 106; 221-232) den Geber nicht berühren.

8. Geschwindigkeitssensor nach einem der Ansprüche 1 bis 7, dadurch gekennzeichnet, daß die Abtastelemente (5, 6; 105, 106; 221-232) eine Änderung der optischen Struktur, des magnetischen Leitwerts oder eines elektrischen oder magnetischen Feldes erfassen.

Fig.1

Fig.2

Fig.3

Europäisches
Patentamt

**EUROPÄISCHER
RECHERCHENBERICHT**

Nummer der Anmeldung

**EP 90 11 3833**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | SOVIET JOURNAL OF INSTRUMENTATION AND CONTROL (translated from the Russian: Pribory i sistemyupravleniya), Nr. 11, November 1969, Seiten 47,48, Oxford, GB; A.S. FILATOV et al.: "Impulse transducers" * Seite 48, Spalte 1, Zeilen 2-23; Figur 4 * | 1,3-8 | G 01 P 3/481 |
| Y | IDEM | 2 | |
| X | NL-A-8 702 195  (SKF) * Seite 1, Zeilen 12-33; Figur 1 * | 1,3-8 | |
| X | US-A-4 028 686  (WILSON et al.) * Spalte 3, Zeilen 2-56; Spalte 6, Zeilen 24,25; Figuren 1-5,7A-7G * | 1,3-5,7,8 | |
| Y | | 2 | |
| X | DE-A-3 104 500  (HÜBNER ELEKTROMASCHINEN) * Seite 4, Zeilen 1-11; Figur 1 * | 1,7,8 | |

| | RECHERCHIERTE SACHGEBIETE (Int. Cl.5) |
|---|---|
| | G 01 P G 01 D |

Der vorliegende Recherchenbericht wurde für alle Patentansprüche erstellt

| Recherchenort | Abschlußdatum der Recherche | Prüfer |
|---|---|---|
| Den Haag | 25 März 91 | HANSEN P. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument